# EUROPEAN PATENT SPECIFICATION

(11) **EP 1 467 521 B1**
(45) Date of publication and mention of the grant of the patent: **07.10.2015**
(21) Application number: 04008776.9
(22) Date of filing: 13.04.2004
(51) Int. Cl.: H04L 12/28, H04L 12/24, H04L 29/08

(54) **System for serving several homes**
System zur Dienstverleihung an mehrere Häuser
Système de service pour plusieurs maisons

(30) Priority: 12.04.2003 KR 2003023234
(43) Date of publication of application: 13.10.2004
(73) Proprietor: Samsung Electronics Co., Ltd., Suwon-si, Gyeonggi-do, 443-742 (KR)
(72) Inventor: Choi, Moon-jeong, Yeongtong-gu, Suwon-si, Gyeonggi-do (KR); Kim, Jun-hyeong, Anyang-si, Gyeonggi-do (KR)
(74) Representative: Grünecker Patent- und Rechtsanwälte PartG mbB

(56) References cited:
- EP-A2- 1 193 912
- US-A1- 2002 144 144
- US-A1- 2003 063 608

## Description

### CROSS-REFERENCE TO RELATED APPLICATION

This application claims the priority of Korean Patent Application No. 2003-23234, filed April 12, 2003, in the Korean Intellectual Property Office.

### BACKGROUND OF THE INVENTION

### 1. Field of the Invention

The present invention relates to a networking service system, and more particularly to a multi-home service system for extending services for mutual accesses of information devices connected to a home network to information devices connected to external home networks.

### 2. Description of the Related Art

Together with communication technology developments, the Internet has emerged such that worldwide communication terminals are connected in one huge network by which diverse services using the Internet have appeared. Beyond the concept of simple material sharing, the recent Internet services have reached a level that enables users to enjoy games and talking in real time with any other person at a distance, as well as to appreciate movies in real time.

Further, various digital information devices having a network function have appeared in the market, such as Internet refrigerator, digital TV, settop box, and so on, which can access the Internet at home. A home network has also been developed which connects such information devices in one network at home in order for users to utilize the devices more conveniently.

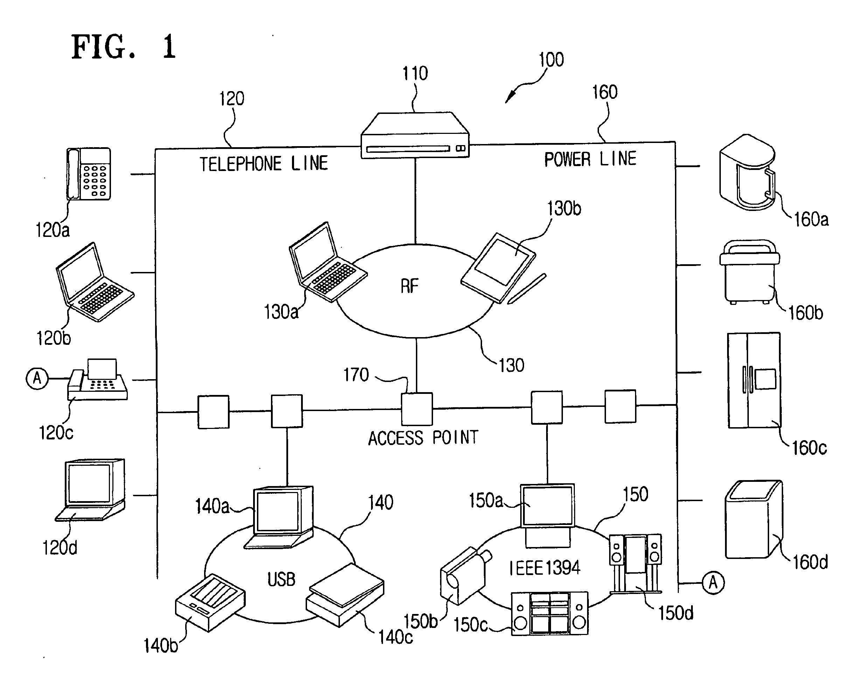

Fig. 1 is a view showing a structure of a general home network. The home network includes various networks such as a telephone network, a wireless LAN or Bluetooth network, a USB network, an IEEE1394 network, an electric power network, and so on.

The telephone line 120 has a telephone set 120a, a notebook computer 120b, a facsimile machine 120c, and a computer 120d connected thereto. The wireless LAN or the Bluetooth network 130 has a notebook computer 130a and a PDA 130b connected thereto. The USB network 140 has a computer 140a, a printer 140b, and a scanner 140c connected thereto. The IEEE1394 150 is a communication protocol for AV instruments, and has a TV set 150a, a camcorder 150b, and an audio system 150c connected thereto. The power line 160 has a facsimile machine A, a coffee maker 160a, an electric rice cooker 160b, a refrigerator 160c, and a washing machine 160d connected thereto. Further, the home network has a gateway 110 connecting an external network and the respective devices which exist on a sub-network. The sub-networks 120, 130, 140, 150, and 160 are connected to one another through an access point such as a bridge.

However, since the home network as described above is mixed up with existing networks such as telephone line, power line, and so on, and new types of networks such as the Bluetooth network, wireless LAN, and so on, the devices on different networks operate based on different hardware and software platforms, which causes difficulties in communications among the devices.

Accordingly, network integration technologies are required to smoothly perform mutual communications among the devices on different networks. Recently, for the network integration, new middleware has been proposed which is designed to build a virtual computing environment such that home devices dispersed on different networks exist in one network, and provide application programs based on the virtual computing environment. For example, there exists the Universal Plug & Play(UpnP), home appliance virtual interface (HAVI), a Java network technology (JINI), and so on, for the middleware.

The middleware as described above is placed between the operating system and the application programs, and connects dispersed data and applications dispersed in the client/server environment together. Further, the middleware supports diverse communication protocols, system structures, operating systems, databases, and applications.

However, the middleware supports home devices on one home network so that these home devices can mutually communicate with one another, but does not support such mutual communications for home devices on external home networks outside the home network due to technical problems; thus, a problem exists with the middleware in that it does not satisfy user's diverse desires. That is, with recent active community services and residence environment changes, home network users desire convenient information exchanges among devices at their own homes together with devices connected to others' home networks. For example, people in an apartment complex want to be able to share files among them to become possible. Additionally, a person might want to control a device installed in his or her home from a neighboring device. Further, members in a specific group desire services so that they can share multi-player games and specific data among them. Such services as above have been developed by Internet service providers, and part of the services is being provided at present.

However, when such services as aforementioned that users want are used through the Internet service providers, there inevitably exists the Internet service providers of third parties as an intermediate medium, which may cause information to be revealed as well as cause inconvenience somewhat to users who want a direct access to other home networks for diverse services such as multi-player games, file sharing, remote controls, medium sharing, and so on. That is, various communication services are provided only by the Internet service providers so far, which causes a problem since users have to accept inconvenience caused by the subscription to such an Internet service as well as pay more for communication fees due to the charges incurred by use of such a service.

US 2003/0063608 A1 describes an extension of discovery protocols on network domains of multi-domain networks. An "Extended Discovery Server" (EDS) is added as a software component to a (home) network in order to enable the devices on this network to discover (or be discovered) and be used by remote devices. The EDS needs to be connected, through the Internet or another Wide Area Network (WAN), to one or more remote EDSs. The limitations of IP multi-casting on the Internet are avoided by connecting multiple clusters of devices via "tunneling" of multicast messages inside point-to-point (or unicast) messages exchanged between the corresponding Extended Discovery Servers.

US 2002/0144144 A1 teaches the simplification of the management of multiple Virtual Private Network (VPN) devices by centralizing control and maintenance of the required LAN access data. The disclosed system for sharing of a VPN device by two or more customers or enterprises maintains a common or centralized data store in the form of a centralized authentication server and a centralized database server.

### SUMMARY

In order to solve the above problems, it is an aspect of the present invention to provide a multi-home service system capable of providing extended access to devices connected to external home networks like the access to devices at one's own home network while removing the worries about revealing information and the like.

In order to achieve the above aspect, a multi-home service system comprises a first interface for exchanging data with information devices connected to a home network; a second interface for exchanging data with information devices connected to external networks; a storage unit for storing a database which is established based on information collected with respect to the information devices connected to the home network and the external networks; and a control unit for collecting information on the information devices connected to the home networks and providing a service for mutual accesses among the information devices connected to the home networks, registering the external networks in a database based on setup information on the external home networks that is transferred through the first interface, and, if multicast packets are delivered from the information devices connected to the home networks, delivering the multicast packets through a virtual private network (VPN) tunnel to the external home networks registered in the database.

The control unit includes an application processing unit for receiving and transferring messages with a multi-home service application built therein in order for the information devices connected to the home networks to be set up with accesses to and information on the external home networks; a network processing unit for forming the VPN tunnel through communications with gateways of the external home networks, and processing mutual data exchanges with the information devices connected to the external home networks through the VPN tunnel; and a main processing unit for collecting information on the information devices connected to the home networks, providing a service for mutual accesses among the information devices, and, if the multicast packets are transferred from the information devices connected to the home networks, processing multicast packet transfers through the VPN tunnel formed through the network processing unit.

The application processing unit includes an external home network registration unit for, if a registration request is transferred through an identifier based on registration rules provided from the application for a registration of an external home network, mapping the requested external home network and the identifier into the database; and an external home network list providing unit for, if the application requests a list of the external home networks registered through the external home network registration unit, providing the list with reference to the database.

The application processing unit further includes a second registration unit for, if the application transfers a registration request through second registration rules provided to register the information devices connected to the external home networks and/or drivers, mapping the registration-requested information devices and/or drivers into the database; and a second list providing unit for providing a list of the information devices and/or drivers registered through the second registration unit from the application with reference to the database. Further, the application processing unit further includes a setup change unit for, if a deletion and setup change request is transferred from the application through edit rules provided to delete and change the setup of options registered through the first and second registration rules, updating the database based on requested options. Further, the application processing unit further includes a state display unit for, if a state information providing request is transferred from the application through a state display window provided to request state information for information exchanges with the external home networks, providing the state information with reference to the database based on whether the VPN tunnel with the external home networks is formed. Further, the application processing unit further includes a service access-allowable range setup unit for, if the application sets up and transfers a service accessible range for the information devices connected to the home networks through service accessible range setup rules provided to set up a service accessible range of the external home networks with respect to each of the information devices connected to the home network, mapping the transferred service accessible range setup information into the database.

The network processing unit includes a network address translation unit for, if a message having a private IP address as an origination address is received from the information devices connected to the home networks, translating the private IP address into an authenticated IP address allocated from an ISP, and translating an authentication IP address as a destination address of a message transferred from an external home network into a private IP address allocated to an information device; and a VPN processing unit for forming the VPN tunnel through communications with the gateways of the external home networks, and mapping into the database a state of whether the VPN tunnel with the external home networks is formed.

If private IP addresses of the home network and an external home network exist on the same level or one of the two home networks includes the address of the other home network, the network processing unit generates a new network address table for the two home networks to use different private IP addresses in the VPN tunnel and maps the network address table into the database, and translates based on the new network address table origination or destination addresses for an information device connected to the home network or data packets transferred from the external home network.

If the destination address is transferred in a multicast IP address format from an information device connected to the home network, the network processing unit encapsulates the multicast IP address in a data packet used on the Internet.

If a gateway of the external home network transfers in the multicast format the destination IP address encapsulated in a data packet, the network processing unit multicasts the data packet to the information devices of the home network, and, if origination and destination IP addresses are transferred in a unicast format from a device fit to the data packet, transfers the packet in the unicast format to the destination IP address.

The main processing unit includes a middleware processing unit for collecting device information and service information on the information devices and mapping the information into the database and providing services for mutual accesses to the information devices connected to the home network, and, if a multicast packet is transferred from an information device connected to the home network, transferring the multicast packet to the registered external home network; and a proxy processing unit for exchanging information with the information devices connected to the home network through the middleware processing unit, and exchanging information with the network processing unit to exchange data with the information devices connected to the external home network.

When an information device connected to the home network transfers a request for access to the information devices connected to the external home network and no VPN tunnel with the external home network is recorded in the database, the middleware processing unit requests the network processing unit to form a VPN tunnel with the external home network. Further, if multicast packets are transferred from the external home network through the VPN tunnel, the middleware processing unit forwards the multicast packets to the information devices connected to the home network. Further, if a response message is transferred from an information device having received the multicast packets, the middleware processing unit transfers the response message to an origination address of the multicast packets through the VPN tunnel.

If an information device connected to the home network transfers a specific service request for an information device of a specific external home network registered for a service through the application, the main processing unit transfers to a destination address of the corresponding information device a data packet for requesting the specific service to be executed through the VPN tunnel with a specific external home network. If the VPN tunnel with the specific external home network is not formed, the main processing unit requests the network processing unit to form the VPN tunnel. Further, if a service unaccessible message is received from the specific external home network, the main processing unit updates the database.

In the meantime, if the service unaccessible message is received from the specified external home network, the main processing unit transfers an unaccessible message to the service-requesting information device. Further, if a data packet requesting a service for access to an information device connected to the home network is received through the VPN tunnel from an external home network and the external home network is accessible, the main processing unit transfers the data packet to a destination address of the packet.

As described above, the multi-home service system according to the present invention enables users to access the devices connected to their own home networks as well as the devices connected to the external home networks so that information can be conveniently and safely exchanged.

### BRIEF DESCRIPTION OF THE DRAWINGS

The invention will be described in detail with reference to the following drawings in which like reference numerals refer to like elements, and wherein:
Fig. 1 is a view for showing a structure of a general home network;
Fig. 2 is a block diagram for showing a gateway having a multi-home service manager according to an embodiment of the present invention;
Fig. 3 is a view for illustrating a multi-home service window provided for users in an application;
Fig. 4A to Fig. 4D are flow charts for respectively explaining operations of the gateway performing a process based on each button provided on the multi-home service window of Fig. 3;
Fig. 5A and Fig. 5B are views for showing a service access policy table and a service access table for external home networks, respectively;
Fig. 6 is a view for showing signal flows among devices connected to two individual home networks having the gateway of Fig. 2;
Fig. 7 to Fig. 9 are flow charts for explaining operations of a multi-home service manager built in the gateway of Fig. 2;
Fig. 10 and Fig. 11 are views for showing a process for providing a home-to-home multi-game service and a process for providing a music file sharing service, respectively.

### DETAILED DESCRIPTION OF THE PREFERRED EMBODIMENT

Hereinafter, the present invention will be described in detail with reference to the attached drawings.

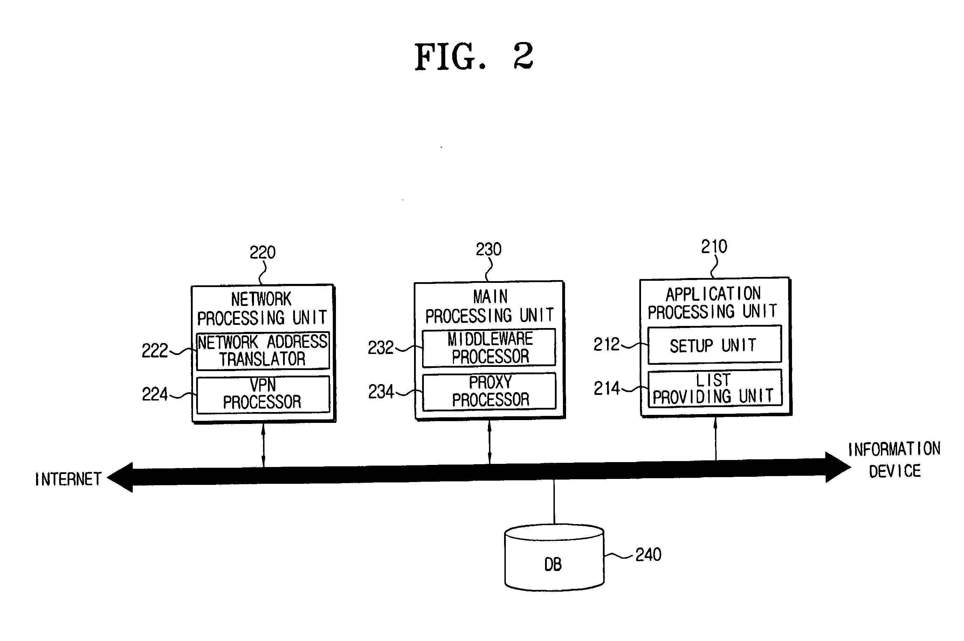

Fig. 2 is a block diagram for showing a gateway having a multi-home service system according to an embodiment of the present invention. A multi-home system is positioned between the Internet and information devices, and has an application processing unit 210, a network processing unit 220, and a main processing unit 230.

The application processing unit 210 exchanges information with a multi-home service application built-in an information device with a graphic user interface which is connected to a home network so that access to and information on external home networks can be set up. Further, the application processing unit 210 performs commands for building and requesting a database 240 according to setup information or request messages sent from the application.

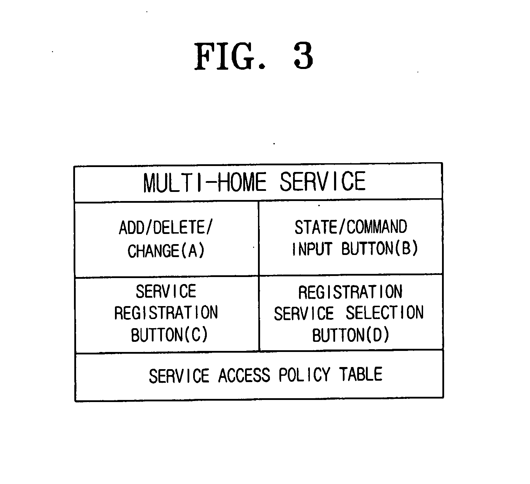

Fig. 3 is a view for illustrating a multi-home service window provided on the screen of an information device in the application. The multi-home service window has an add/delete/change button A, a state/command input button B, a service registration button C, a registration service selection button D, and a service access policy table button.

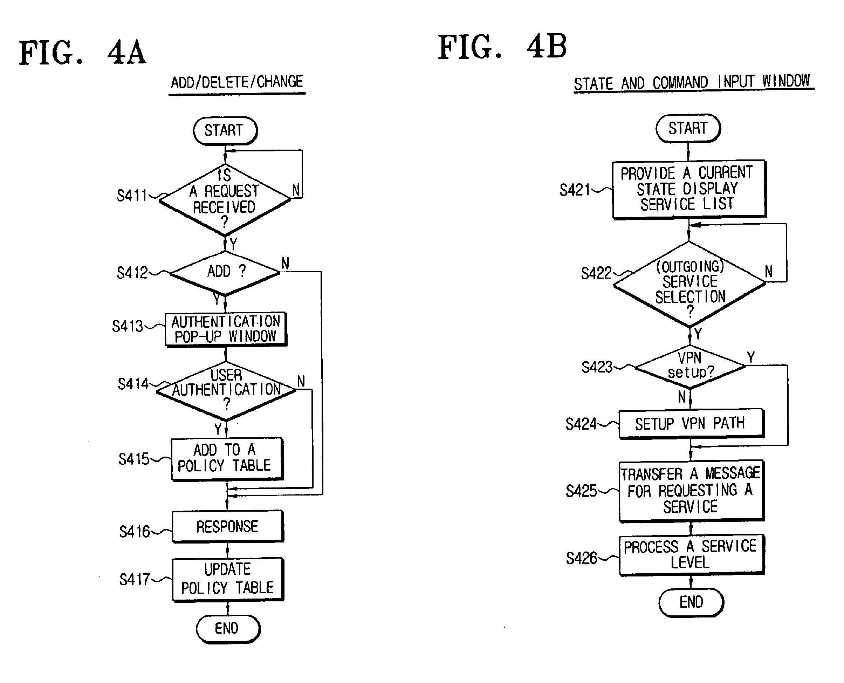

The add/delete/change button A is a button to be selected when a user wants to add, delete, or change a service or driving program for external home networks and information devices connected to the external home networks. Fig. 4A is a flow chart for explaining operations when the add/delete/change button is selected. First, if the add/delete/change button A is selected (S411), the application processing unit 210 requests an addition, deletion, or change to a multi-home service manager of an external home network corresponding to the application processing unit 210. Thus, the multi-home service manager displays an authentication pop-up window (S413) on the information device having a built-in graphic user interface, if the request is made on an option of addition (S412). Thereafter, if accepted by a user, the multi-home service manager adds to its service access policy table, information on the addition-requesting home network (S415), and sends a response message (S416) for the addition to the addition-requesting home network and updates a database (S417). Further, if a received message is a request for a deletion or a change, the multi-home service manager immediately sends a response message and updates the database. In the meantime, the user's multi-home service manager having received the response message from the external home network updates its database.

The state/command input button B is a button to be selected when a user wants to look at the states of the connections with external home networks. Further, if the state/command input button B is selected, the services of the previously registered external home networks are displayed all together (S421), and, if a user selects the service, the multi-home service manager can immediately send a service request command (e.g., S425). Fig. 4B is a flow chart for explaining the operations when the state/command input button B is selected.

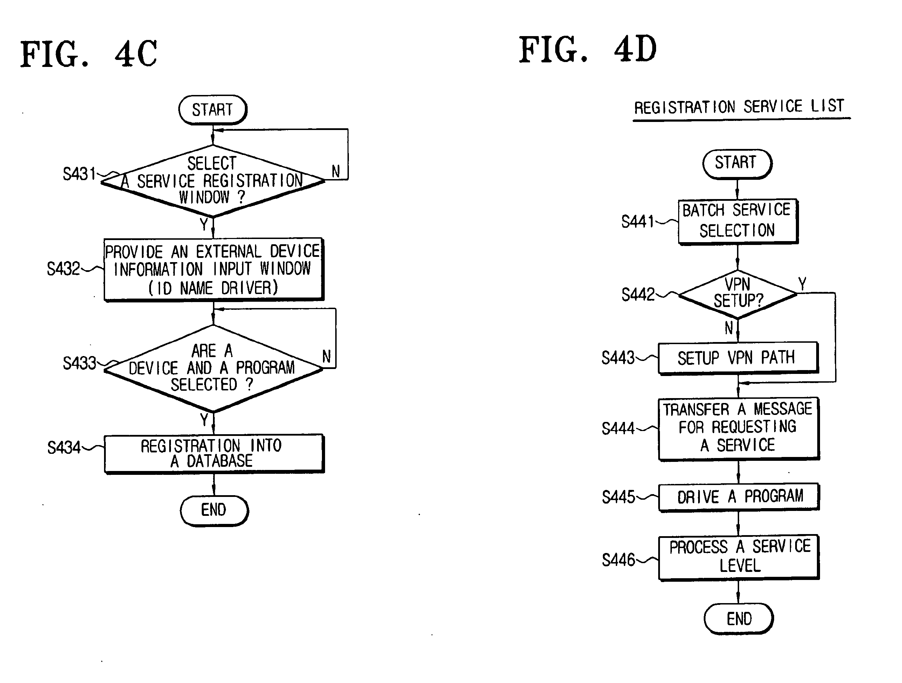

The service registration button C is a button to be selected when a user wants to register the services and set-up programs related to information devices connected to external home networks. If the button C is selected (S431), the application provides an external device registration window (S432). Further, if the services and drivers of an external device are set up through the external device registration window (S433), the application updates the database based on the set-up options (S434). Fig. 4C is a flow chart for explaining the operations when the service registration button C is selected.

The registration service selection button D is a button to be selected when a user wants to access or drive services or drivers while looking at a registered service list of a specific external home network. At this time, individual services and drivers on a list serve as batch files. Fig. 4D is a flow chart for explaining the operations when the registration service selection button D is selected. If the registration service selection button D is selected at the time any virtual private network(VPN) tunnel is not formed with an external home network, the application performs a process for forming the VPN tunnel (S443), and sends a service execution request message (S444). Further, if a corresponding program is driven, a process is performed for a service based on an application program.

The service access policy table button is a button provided for a user to set up an accessible service range of an information device connected to a home network from an external home network. The database is updated according to an access-allowable service range set up by the user.

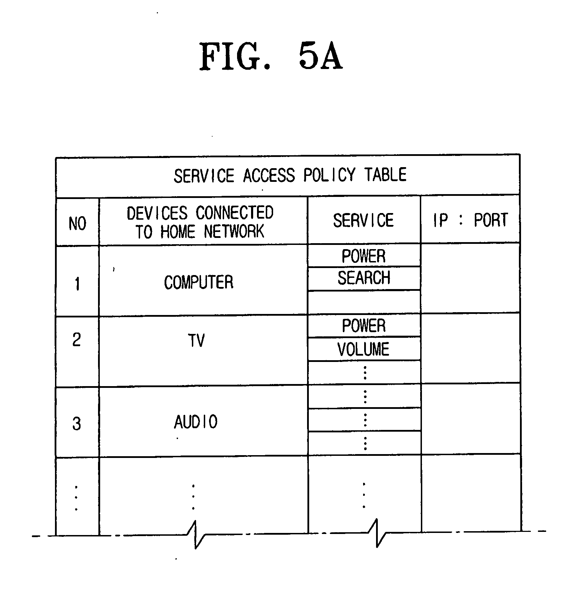

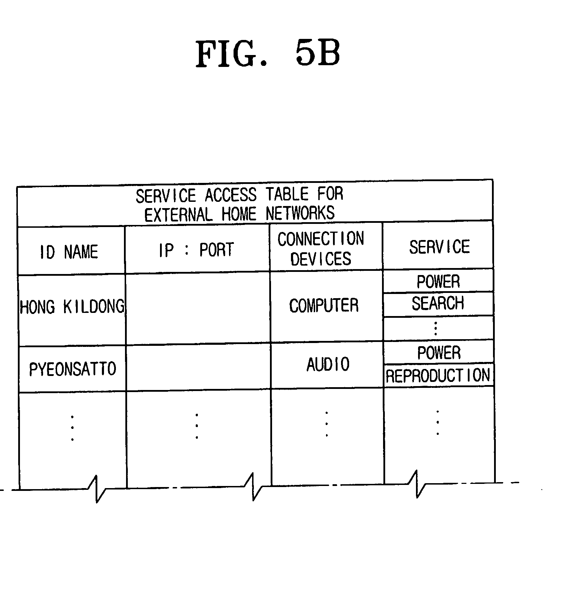

Fig. 5A and Fig. 5B are views for showing structures of a service access policy table and a service access table for an external home network that are built through a message delivery process with applications built in information devices and through a communication process with a multi-home service manager of the external access network, as above, in the application processing unit.

The network processing unit 220 forms the VPN tunnel between a home network and an external home network, and processes data exchanges through the formed VPN tunnel. To do so, the network processing unit 220 has a network address translator 222 and a VPN processor 224.

The network address translator 222, if a message having a private IP address as an origination address is received from an information device connected to a home network, translates the private IP address into an authenticated IP address allocated from an Internet service provider(ISP). Further, the network address translator 222 translates an authenticated IP address-typed destination address of a message delivered from an external home network into a private IP address assigned to a corresponding information device. Moreover, if a destination address is delivered in a multicast IP address format from an information device connected to a home network, the network address translator 222 encapsulates the multicast IP address in an Internet data packet.

The network processing unit 220 includes the VPN processor 224 communicating with a gateway of an external home network and forming a VPN tunnel. Here, the VPN processor 224 serves as a VPN server or a VPN client depending upon the situation with respect to the gateway of the external home network, and forms a tunnel to the gateway of the external home network. Further, if addresses allocated to the devices connected to the home network have the same level as private IP addresses allocated to the devices connected to an external home network or the private IP addresses allocated to any of home networks are included in the private IP addresses of another home network, the network processing unit 220 produces a new network address table in order for the two home networks to use different private IP addresses from each other in the VPN tunnel, maps the new network address table into the database, and uses the network address translator with respect to data packets transferred from an information device connected to the home network or from an external home network to translate an origination address and a destination address based on the new network address table.

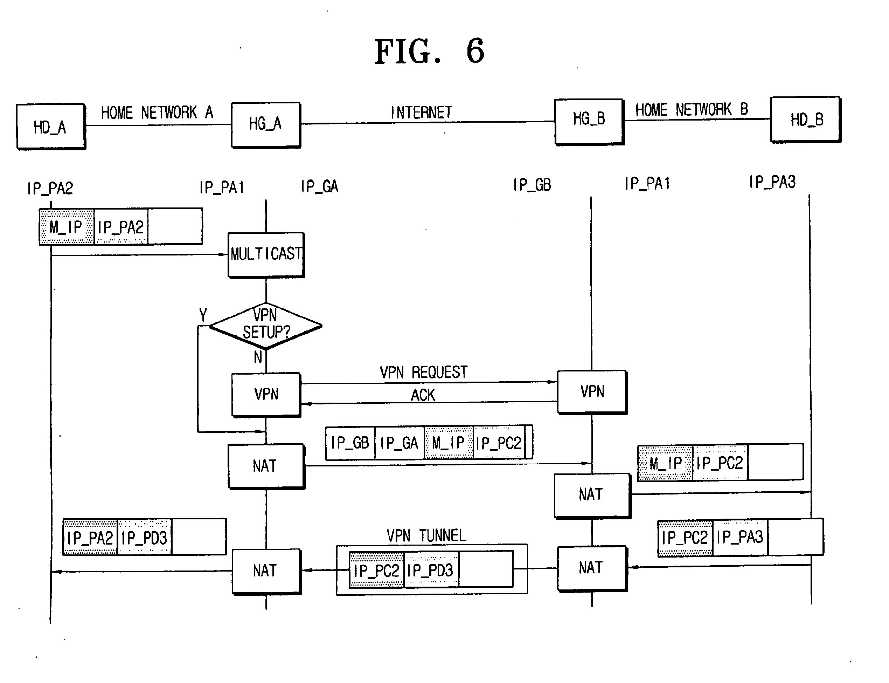

Fig. 6 is a view for showing signal flows for showing a process for forming a VPN tunnel and transferring signals as an information device connected to a home network requests access to an information device connected to an external home network. Here, if a destination IP address encapsulated in an Internet data packet is delivered in a multicast format from a gateway of an external home network, the network processing unit 220 multicasts the destination IP address to information devices of a home network, and, if origination and destination IP addresses are delivered in a unicast format from a device fit to data packet, transfers packets to the destination IP address in the unicast format.

The main processing unit 230 collects information on information devices connected to a home network and provides service for mutual accesses among the information services connected to the home network. Further, if multicast packets are transferred from an information device connected to the home network, the main processing unit 230 uses a VPN tunnel formed through the network processing unit 220 to send the multicast packets up to an external home network. Further, if an access request is transferred from an information device connected to the home network to an external network, the main processing unit 230 checks a communication state with an external home network, and, if any VPN tunnel is not established, communicates with the network processing unit 220 of the external home network through the network processing unit 220 to form a VPN tunnel, and, after obtaining information on information devices connected to the external home network, provides the obtained information to an access-requesting information device. For the above operations, the main processing unit 230 includes a middleware processor 232 and a proxy processor 234.

The middleware processor 232 collects device information and control information from individual devices connected to a home network and maps the collected information into a database. Further, if multicast packets are transferred from home devices connected to the home network, the middleware processor 232 exchanges information with the network processing unit 220 to transfer the multicast packets to an external home network specified in advance by registration rules provided by the application processing unit 210. If an access request is transferred from an information device connected to a home network to an information device connected to an external home network and a VPN tunnel with the external home network is not recorded in the database, the middleware processor 232 requests the network processing unit 220 to form a VPN tunnel with the external home network. Further, if multicast packets are delivered from an external home network through a VPN tunnel, the middleware processor 232 forwards the multicast packets to the information devices connected to the home network. Further, if a response message is sent from an information device having received multicast packets, the middleware processor 232 transfers the response message to an origination address of the multicast packets.

The proxy processor 234 exchanges information with information devices connected to a home network through the middleware processor 232, and exchanges information with the application processing unit 210 and the network processing unit 220 in relation to information exchanges with information devices connected to an external home network. If a specific service request is sent from an information device connected to a home network for an information device of a specific external home network registered for services through an application, the proxy processor 234 delivers specific service-requesting data packets to a specific information device through a VPN tunnel formed with a specific external home network. Further, if the VPN tunnel is not formed with the specific external home network, the proxy processor 234 requests the network processing unit 220 to form a VPN tunnel. Moreover, if a service-unaccessible message is received from an external home network, the proxy processor 234 updates the database 240.

The database 240 is built with information established through various rules provided from applications and information obtained through information exchanges with external home networks. Fig. 5A is a view for showing a form of the database 240 built through various rules established for an access from a home network to external home networks and information exchanges with the external home networks, and Fig. 5B illustrates devices which are accessible from an external home network based on a user's allowable range authentication when the external home network requests an access to a home network. Fig. 5A shows a structure by which a service access from an external home network is recognized through identifiers and ports, but the database can be designed for a user to assign an accessible level depending upon access users and enable the access users to access a service depending upon a level assigned through authentication. Diverse rules may exist for the accessible level, and a service access has to be allowed when such rules are mutually agreed between one authenticating an access and one requesting the access.

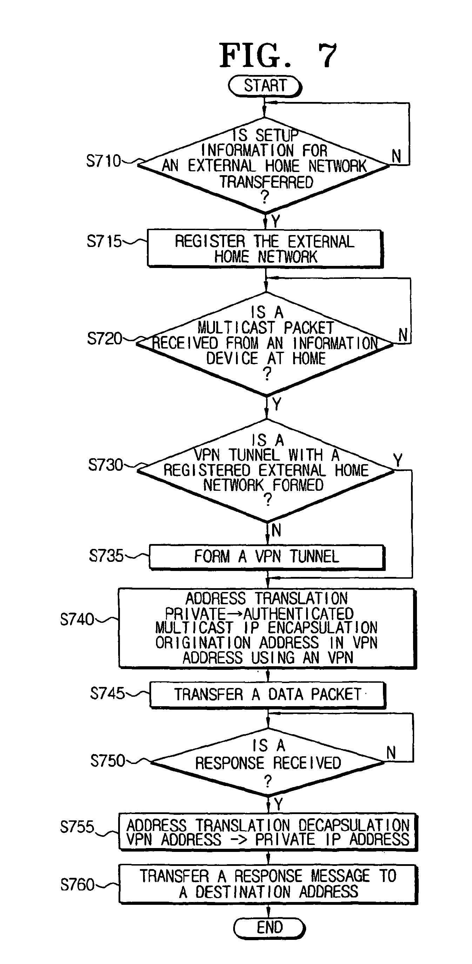

Fig. 7 to Fig. 9 are flow charts for explaining operations of a multi-home service manager according to an embodiment of the present invention.

Fig. 7 is a flow chart for explaining operations of the multi-home service manager delivering multicast packets up to information devices connected to an external home network when the multicast packets have been transferred from an information device at home.

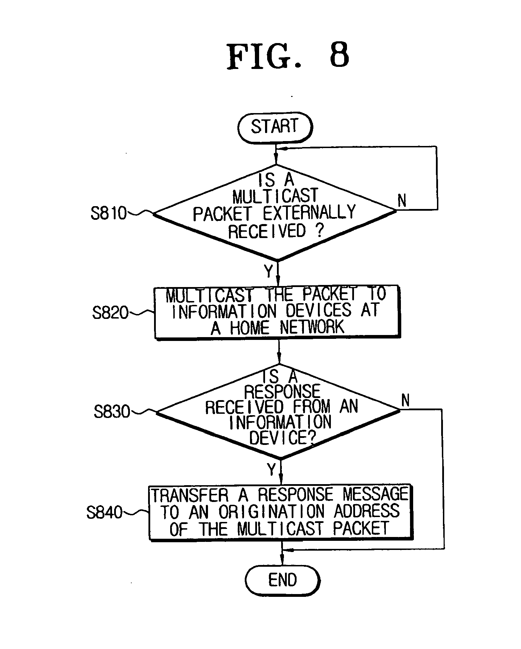

Fig. 8 is a flow chart for explaining operations of the multi-home service manager transferring multicast packets to information devices of a home network when the multicast packets have been delivered from an external home network.

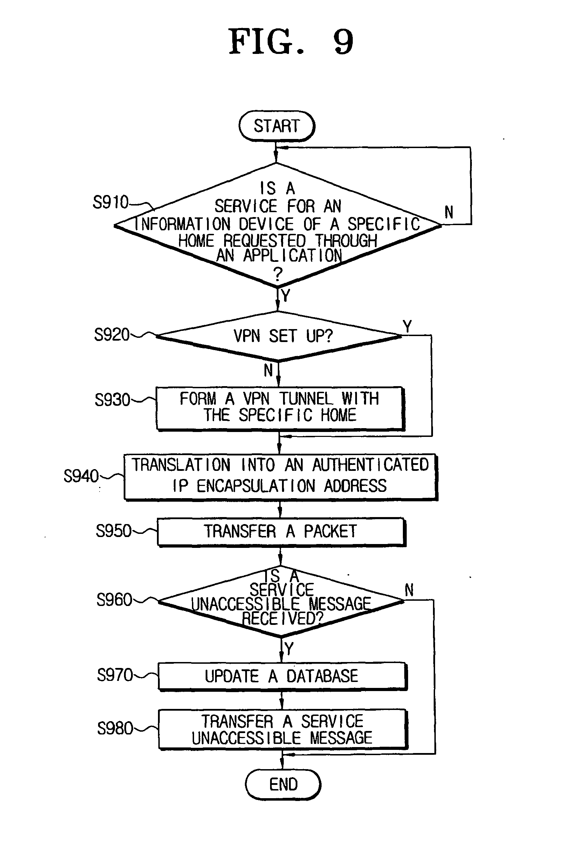

Fig. 9 is a flow chart for explaining operations of the multi-home service manager when a specific service is requested through applications for a specific home information device registered in a database.

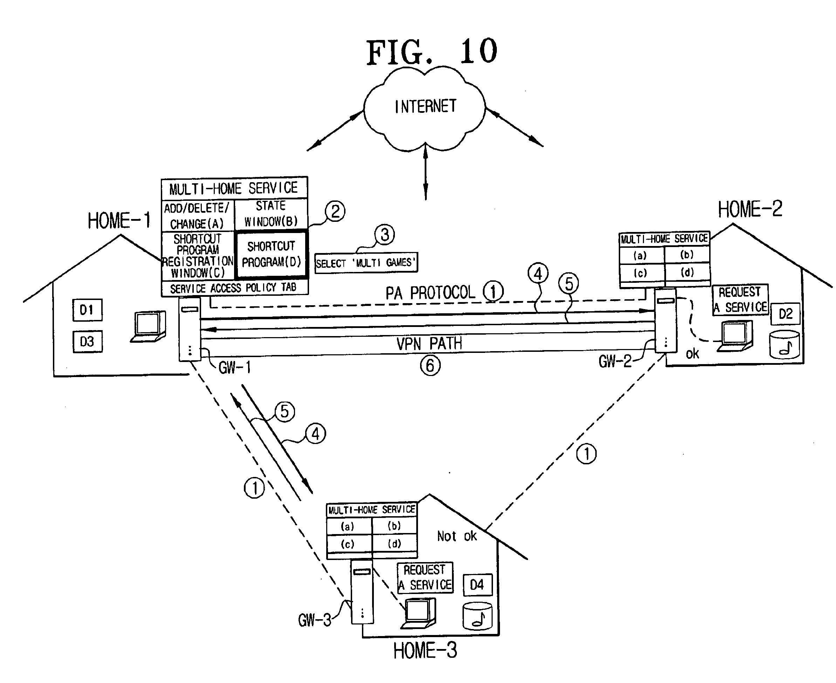

Fig. 10 is a view for illustrating a multi-home service using a gateway having the multi-home service manager of Fig. 2, showing a process for providing a home-to-home network game service. Here, it is assumed that gateways installed at a home 1 to a home 3 enable respective homes to exchange information with one another through a proxy agent(PA) protocol(①). In the ① state, if a user at the home 1 selects a shortcut program button D through the multi-home service window as shown in Fig. 3(②) and selects 'multi games' on a shortcut program list(③), the proxy processor of a first gateway GW-1 inquires of the home 2 and home 3 about whether the 'multi games' is allowable(④). Thereafter, a user of each home selects whether he or she allows the ④, the proxy processor 234 of each of the second and third gateways transfers to the home 1 a response message based on the selection(⑤). At this time, if the home 2 allows the ④ and the home 3 does not allow the ④, the proxy processor 234 of the first gateway exchanges data through the home 2 and a VPN tunnel, thereby enabling a multi-player game.

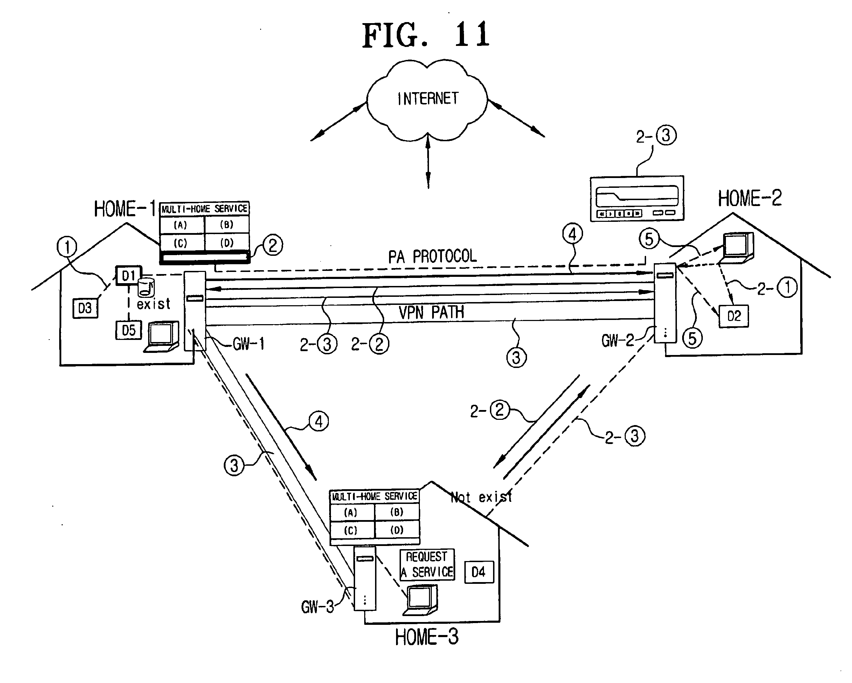

Fig. 11 a view for illustrating another multi-home service using the gateway of Fig. 2, showing a process for providing a service enabling a user to search for and reproduce desired music files in an external home network. Even here, it is assumed that the gateways installed at the home 1 to home 3 enable the homes to exchange information through the PA protocol(refer to dotted lines of Fig. 11). First, a user at the home 1 searches information devices of his or her own home for desired music files through an information device placed in front of himself or herself(①), and, if it is decided that any of the desired music files does not exist, selects the service access policy table on the multi-home service window as shown in Fig. 3(②). Thereafter, the application processing unit 210 of the first gateway displays the tables shown in Fig. 5A and Fig. 5B, and, if the user requests searching for his or her desired music files even in devices connected to external home networks through the tables, the proxy processor of the first gateway GW-1 communicates with the gateways of the homes 2 and 3 through the network processing unit 220 and forms a VPN tunnel with each gateway(③), and sends to each home a message inquiring whether the files exist(④). Thereafter, the proxy processor 234 of a gateway representing the homes 2 and 3 inquires of devices belonging to each home through each middleware about whether the corresponding files exist(⑤). Here, packets having the message searching for the user's desired files are delivered to the information devices at the home in the multicast format, and, if the homes 2 and 3 have been connected through the VPN tunnel, the multicast packets are transferred to the information devices at the home and, at the same time, to the homes 2 and 3, without the steps ② and ③.

In the meantime, if multicast packets searching for music files are transferred from information devices at the home 2, the middleware processor 232 searches whether the corresponding music files exist in the devices at the home 2(2-①), and delivers the multicast packets through the VPN tunnel to an external home network registered in the database. Thereafter, the middleware processor of each external home network transfers the multicast packets to information devices belonging to each home. At this time, the information devices in which the middleware of each home is built receives the multicast packets, and the information devices having the requested music files transfer a response message. Thus, the information device having transferred the multicast packets of the home 2 receives the response message, and can reproduce the desired music based on the received response message.

As described above, the multi-home service system according to the present invention can exchange information more safely due to direct data exchanges through external home networks and VPN tunnels, as well as the multi-home service system is economical since it does not use any Internet service provider so that no extra payments are needed for the services.

Further, the present invention enables a user to have more information since the user can extend services available at a home to external home networks, and enables diverse remote services to be carried out since an access can be easily made to diverse devices of the external home networks.

Although exemplary embodiments of the present invention have been described, it will be understood by those skilled in the art that the present invention should not be limited to the described exemplary embodiments, but various changes and modifications can be made within the scope of the present invention as defined by the appended claims.

## Claims

1. A multi-home service system, comprising:
a first interface for exchanging data with information devices connected to a home network;
a second interface for exchanging data with other information devices connected to external home networks;
a storage unit for storing a database (240) which is established based on information collected with respect to the information devices connected to the home network and the other devices connected to the external home networks;
**characterized by**
a control unit for collecting information on the information devices connected to the home network and said other information devices, and providing a service for mutual accesses among the information devices connected to the home network and said other information devices, registering the external networks in the database (240) based on setup information on the external home networks that is transferred through the first interface, and, if multicast packets are delivered from the information devices connected to the home network and the other devices connected to the external home networks, delivering the multicast packets through a virtual private network, VPN, tunnel to the external home networks registered in the database (240);
wherein the control unit comprises:
an application processing unit (210) for receiving and transferring messages with a multi-home service application built therein in order for the information devices connected to the home network to be set up with accesses to and information on the external home networks;
a network processing unit (220) for forming the VPN tunnel through communications with gateways of the external home networks, and processing mutual data exchanges with the other information devices connected to the external home networks through the VPN tunnel; and
a main processing unit (230) for collecting said information on the information devices connected to the home network and the other information devices, providing said service for mutual accesses among the information devices and the other information devices, and, if the multicast packets are transferred from the information devices connected to the home network, processing multicast packet transfers through the VPN tunnel formed through the network processing unit (220); and
wherein the application processing unit (210) comprises:
an external home network registration unit (212) for, if a registration request is transferred through an identifier based on registration rules provided from the multi-home service application for a registration of an external home network, mapping the requested external home network and the identifier into the database (240); and
an external home network list providing unit (214) for, if the multi-home service application requests a list of external home networks registered through the external home network registration unit (212), providing the list with reference to the database (240).

2. The multi-home service system as claimed in claim 1, wherein the application processing unit (210) further comprises:
a second registration unit for, if the multi-home service application transfers a second registration request based on second registration rules provided to register at least one of the other information devices connected to the external home networks and drivers, mapping said at least one of the registration-requested information devices and drivers into the database (240); and
a second list providing unit for providing a list of said at least one of the information devices and drivers registered through the second registration unit based on the multi-home service application, with reference to the database (240).

3. The multi-home service system as claimed in claim 2, wherein the application processing unit (210) further comprises a setup change unit for, if a deletion and setup change request is transferred from the multi-home service application based on edit rules provided to delete and change a setup of options registered through the first and second registration rules, updating the database (240) based on requested options.

4. The multi-home service system as claimed in claim 3; wherein the application processing unit (210) further comprises a state display unit for, if a state information providing request is transferred from the multi-home service application through a state display window provided to request state information for information exchanges with the external home networks, providing the state information with reference to the database (240) based on whether the VPN tunnel with the external home networks is formed.

5. The multi-home service system as claimed in claim 4, wherein the application processing unit (210) further comprises a service access-allowable range setup unit for, if the multi-home service application sets up and transfers a service accessible range for the information devices connected to the home network and the other information devices based on service accessible range setup rules provided to set up a service accessible range of the external home networks with respect to each of the information devices connected to the home network, mapping transferred service accessible range setup information into the database (240).

6. The multi-home service system as claimed in claim 1, wherein the network processing unit (220) comprises:
a network address translation unit (222) for, if a message having a private IP address as an origination address is received from the information devices connected to the home network, translating the private IP address into an authenticated IP address allocated from an ISP, and translating an authentication IP address as a destination address of a message transferred from an external home network into a private IP address allocated to an information device; and
a VPN processing unit (224) for forming the VPN tunnel through communications with gateways of the external home networks, and mapping into the database (240) a state of whether the VPN tunnel with the external home networks is formed.

7. The multi-home service system as claimed in claim 6, wherein, if at least one of private IP addresses of the home network and one of the external home networks, wherein the home network and said one of the external home networks constitute two home networks, exist on a same level and one of the two home networks includes the address of the other home network, the network processing unit (220) generates a new network address table for the two home networks to use different private IP addresses in the VPN tunnel and maps the network address table into the database (240), and translates, based on one of a new network address table origination and destination addresses, for one of an information device connected to the home network and data packets transferred from the external home network.

8. The multi-home service system as claimed in claim 7, wherein, if the destination address is transferred in a multicast IP address format from an information device connected to the home network, the network processing unit (220) encapsulates the multicast IP address in a data packet used on the Internet.

9. The multi-home service system as claimed in claim 8, wherein, if a gateway of the one of the external home networks transfers in the multicast format the destination IP address encapsulated in a data packet, the network processing unit (220) multicasts the data packet to the information devices of the home network, and, if origination and destination IP addresses are transferred in a unicast format from a device packet, transfers the packet in the unicast format to the destination IP address.

10. The multi-home service system as claimed in claim 9, wherein the main processing unit (230) comprises:
a middleware processing unit (232) for collecting device information and service information on the information devices connected to the home network and the other devices, and mapping the device information into the database (240), and, when an information device connected to the home network requests access to a different information device connected to the home network and the other information devices connected to the external home networks, providing to the access-requesting information device information on the different information device and the information devices connected to the external home networks; and
a proxy processing unit (234) for exchanging information with the information devices connected to the home network through the middleware processing unit (232), and exchanging information with the network processing unit (220) to exchange data with the other information devices connected to the external home networks.

11. The multi-home service system as claimed in claim 10, wherein, when an information device connected to the home network transfers a request for an access to at least one of the other information devices connected to the one of the external home networks and no VPN tunnel with the one of the external home networks is recorded in the database (240), the middleware processing unit (232) requests the network processing unit (220) to form the VPN tunnel with the one of the external home network.

12. The multi-home service system as claimed in claim 11, wherein, if the multicast packets are transferred from the one of the external home networks through the VPN tunnel, the middleware processing unit (232) forwards the multicast packets to the information devices connected to the home network.

13. The multi-home service system as claimed in claim 12, wherein, if a response message is transferred from an information device having received at least one of the multicast packets, the middleware processing unit (232) transfers the response message to an origination address of the multicast packets through the VPN tunnel.

14. The multi-home service system as claimed in claim 1, wherein, if an information device connected to the home network transfers a specific service request for an information device of a specific external home network registered for a service through the multi-home service application, the main processing unit (230) transfers to a destination address of the corresponding information device connected to the home network, a data packet for requesting the specific service to be executed through the VPN tunnel with the specific external home network.

15. The multi-home service system as claimed in claim 14, wherein, if the VPN tunnel with the specific external home network is not formed, the main processing unit (230) requests the network processing unit (220) to form the VPN tunnel.

16. The multi-home service system as claimed in claim 15, wherein, if a service unaccessible message is received from the specific external home network, the main processing unit (230) updates the database (240).

17. The multi-home service system as claimed in claim 16, wherein, if the service unaccessible message is received from the specified external home network, the main processing unit (230) transfers an unaccessible message to the service-requesting information device.

18. The multi-home service system as claimed in claim 17, wherein, if a data packet requesting a service for an access to an information device connected to the home network is received through the VPN tunnel from an external home network and the external home network is accessible, the main processing unit (230) transfers the data packet to a destination address of the packet.

## Patentansprüche

1. Ein Multi-Home-Service-System, umfassend:
eine erste Schnittstelle zum Austauschen von Daten mit Informationsvorrichtungen, die mit einem Heimnetzwerk verbunden sind;
eine zweite Schnittstelle zum Austauschen von Daten mit anderen Informationsvorrichtungen, die mit externen Heimnetzwerken verbunden sind;
eine Speichereinheit zum Speichern einer Datenbank (240), die auf Basis von Informationen erstellt wird, die in Bezug auf die Informationsvorrichtungen, die mit dem Heimnetzwerk verbunden sind, und die anderen Vorrichtungen, die mit den externen Heimnetzwerken verbunden sind, gesammelt werden;
**gekennzeichnet durch**
eine Steuereinheit zum Sammeln von Informationen über die Informationsvorrichtungen, die mit dem Heimnetzwerk verbunden sind, und die anderen Informationsvorrichtungen, und zum Bereitstellen eines Dienstes für gegenseitige Zugriffe unter den Informationsvorrichtungen, die mit dem Heimnetzwerk verbunden sind, und den anderen Informationsvorrichtungen, zum Registrieren der externen Netzwerke in der Datenbank (240) auf der Grundlage von Einrichtinformationen über die externen Heimnetzwerke, die über die erste Schnittstelle übertragen werden, und, wenn Multicast-Pakete von den Informationsvorrichtungen, die mit dem Heimnetzwerk verbunden sind, und den anderen Vorrichtungen, die mit den externen Heimnetzwerken verbunden sind, geliefert werden, zum Liefern der Multicast-Pakete über einen virtuelles privates Netzwerk, VPN, Tunnel an die externen Heimnetzwerke, die in der Datenbank (240) registriert sind;
wobei die Steuereinheit umfasst:
eine Anwendungsverarbeitungseinheit (210) zum Empfangen und Übertragen von Nachrichten mit einer Multi-Home-Service-Anwendung, die darin integriert ist, damit die Informationsvorrichtungen, die mit dem Heimnetzwerk verbunden sind, mit Zugriff auf und Informationen über die externen Heimnetzwerke eingerichtet werden;
eine Netzwerkverarbeitungseinheit (220) zum Bilden des VPN-Tunnels über Kommunikationen mit Gateways der externen Heimnetzwerke, und zum Verarbeiten von gegenseitigem Datenaustausch mit den anderen Informationsvorrichtungen, die mit den externen Heimnetzwerken verbunden sind, über den VPN-Tunnel; und
eine Hauptverarbeitungseinheit (230) zum Sammeln der Informationen über die Informationsvorrichtungen, die mit dem Heimnetzwerk verbunden sind, und die anderen Informationsvorrichtungen, zum Bereitstellen des Dienstes für gegenseitige Zugriffe unter den Informationsvorrichtungen und den anderen Informationsvorrichtungen, und, wenn die Multicast-Pakete von den Informationsvorrichtungen, die mit dem Heimnetzwerk verbunden sind, übertragen werden, zum Verarbeiten von Multicast-Paket-Übertragungen über den VPN-Tunnel, der **durch** die Netzwerkverarbeitungseinheit (220) gebildet wird; und
wobei die Anwendungsverarbeitungseinheit (210) umfasst:
eine Externes-Heimnetzwerk-Registrierungseinheit (212), um, wenn eine Registrierungsanforderung mittels einer Kennung auf der Grundlage von Registrierungsregeln übertragen wird, welche von der Multi-Home-Service-Anwendung für eine Registrierung eines externen Heimnetzwerkes bereitgestellt werden, das angeforderte externe Heimnetzwerk und die Kennung in der Datenbank (240) abzubilden; und
eine Externes-Heimnetzwerk-Liste-Bereitstellungseinheit (214), um, wenn die Multi-Home-Service-Anwendung eine Liste von externen Heimnetzwerken, die über die Externes-Heimnetzwerk-Registrierungseinheit (212) registriert wurden, anfordert, die Liste mit Bezug auf die Datenbank (240) bereitzustellen.

2. Das Multi-Home-Service-System nach Anspruch 1, wobei die Anwendungsverarbeitungseinheit (210) ferner umfasst:
eine zweite Registrierungseinheit, um, wenn die Multi-Home-Service-Anwendung eine zweite Registrierungsanforderung auf der Grundlage von zweiten Registrierungsregeln überträgt, die zum Registrieren der anderen Informationsvorrichtungen, die mit den externen Heimnetzwerken verbunden sind, und/oder von Treibern bereitgestellt werden, die Informationsvorrichtungen und/oder die Treiber, für die Registrierung angefordert wird, in der Datenbank (240) abzubilden; und
eine zweite Liste-Bereitstellungseinheit zum Bereitstellen einer Liste der Informationsvorrichtungen und/oder der Treiber, die durch die zweite Registrierungseinheit registriert wurden, auf der Grundlage der Multi-Home-Service-Anwendung mit Bezug auf die Datenbank (240).

3. Das Multi-Home-Service-System nach Anspruch 2, wobei die Anwendungsverarbeitungseinheit (210) ferner eine Einrichtungsänderungseinheit umfasst, um, wenn eine Löschungs- und Einrichtungsänderungsanforderung von der Multi-Home-Service-Anwendung auf der Grundlage von Editier-Regeln übertragen wird, die bereitgestellt werden, um eine Konfiguration von Optionen, die durch die ersten und zweiten Registrierungsregeln registriert wurden, zu löschen und zu ändern, die Datenbank (240) auf der Grundlage von angeforderten Optionen zu aktualisieren.

4. Das Multi-Home-Service-System nach Anspruch 3, wobei die Anwendungsverarbeitungseinheit (210) ferner eine Zustandsanzeigeeinheit umfasst, um, wenn eine Zustandsinformationsbereitstellungsanforderung von der Multi-Home-Service-Anwendung über ein Zustandsanzeigefenster übertragen wird, das vorgesehen ist, um Zustandsinformationen für den Informationsaustausch mit den externen Heimnetzwerken anzufordern, die Zustandsinformationen mit Bezug auf die Datenbank (240) basierend darauf, ob der VPN-Tunnel mit den externen Heimnetzwerken gebildet wurde, bereitzustellen.

5. Das Multi-Home-Service-System nach Anspruch 4, wobei die Anwendungsverarbeitungseinheit (210) ferner eine Dienst-Zugänglichkeitsbereich-Einrichtungseinheit umfasst, um, wenn die Multi-Home-Service-Anwendung einen Dienst-Zugänglichkeitsbereich für die Informationsvorrichtungen, die mit dem Heimnetzwerk verbunden sind, und die anderen Informationsvorrichtungen auf der Grundlage von auf Dienst-Zugänglichkeitsbereich-Einrichtungsregeln einrichtet und überträgt, die vorgesehen sind, um einen Dienst-Zugänglichkeitsbereich der externen Heimnetzwerke in Bezug auf jede der Informationsvorrichtungen, die mit dem Heimnetzwerk verbunden sind, einzurichten, übertragene Dienst-Zugänglichkeitsbereich-Einrichtungs-Informationen in der Datenbank (240) abzubilden.

6. Das Multi-Home-Service-System nach Anspruch 1, wobei die Netzwerkverarbeitungseinheit (220) umfasst:
eine Netzwerkadressenübersetzungseinheit (222), um, wenn eine Nachricht mit einer privaten IP-Adresse als Ursprungsadresse von den Informationsvorrichtungen, die mit dem Heimnetzwerk verbunden sind, empfangen wird, die private IP-Adresse in eine von einem ISP zugewiesene, authentifizierte IP-Adresse zu übersetzen, und um eine Authentifizierungs-IP-Adresse als Zieladresse einer Nachricht, die von einem externen Heimnetzwerk übertragen wird, in eine einer Informationsvorrichtung zugewiesene, private IP-Adresse zu übersetzen; und
eine VPN-Verarbeitungseinheit (224) zur Bildung des VPN-Tunnels über Kommunikationen mit Gateways der externen Heimnetzwerke, und zum Abbilden eines Zustands, ob der VPN-Tunnel mit den externen Heimnetzwerken gebildet ist, in der Datenbank (240).

7. Das Multi-Home-Service-System nach Anspruch 6, wobei die Netzwerkverarbeitungseinheit (220), wenn private IP-Adressen des Heimnetzwerks und eines der externen Heimnetzwerke auf einer gleichen Ebene existieren, wobei das Heimnetzwerk und das eine der externen Heimnetzwerke zwei Heimnetzwerke bilden, und/oder eines der zwei Heimnetzwerke die Adresse des anderen Heimnetzwerks umfasst, eine neue Netzwerkadressentabelle erzeugt, damit die zwei Heimnetzwerke verschiedene private IP-Adressen in dem VPN-Tunnel verwenden, und die Netzwerkadressentabelle in der Datenbank (240) abbildet, und Ursprungs- und Zieladressen, auf der Grundlage eines von einer neuen Netzwerkadressentabelle, für eine Informationsvorrichtung, die mit dem Heimnetzwerk verbunden ist, oder Datenpakete, die von dem externen Heimnetzwerk übertragen werden, übersetzt.

8. Das Multi-Home-Service-System nach Anspruch 7, wobei die Netzwerkverarbeitungseinheit (220), wenn die Zieladresse in einem Multicast-IP-Adressenformat von einer Informationsvorrichtung, die mit dem Heimnetzwerk verbunden ist, übertragen wird, die Multicast-IP-Adresse in einem Datenpaket, das im Internet eingesetzt wird, einkapselt.

9. Das Multi-Home-Service-System nach Anspruch 8, wobei die Netzwerkverarbeitungseinheit (220), wenn ein Gateway des einen der externen Heimnetzwerke die in einem Datenpaket eingekapselte IP-Zieladresse in dem Multicast-Format überträgt, das Datenpaket an die Informationsvorrichtungen des Heimnetzwerks als Multicast sendet, und, wenn Ursprungs- und Ziel-IP-Adressen in einem Unicast-Format von einem Vorrichtungspaket übertragen werden, das Paket in dem Unicast-Format an die Ziel-IP-Adresse überträgt.

10. Das Multi-Home-Service-System nach Anspruch 9, wobei die Hauptverarbeitungseinheit (230) umfasst:
eine Middleware-Verarbeitungseinheit (232) zum Sammeln von Vorrichtungsinformationen und Dienstinformationen über die Informationsvorrichtungen, die mit dem Heimnetzwerk verbunden sind, und die anderen Vorrichtungen, und zum Abbilden der Vorrichtungsinformationen in der Datenbank (240), und, wenn eine Informationsvorrichtung, die mit dem Heimnetzwerk verbunden ist, Zugriff auf eine verschiedene Informationsvorrichtung, die mit dem Heimnetzwerk verbunden ist, und die anderen Informationsvorrichtungen, die mit den externen Heimnetzwerken verbunden sind, fordert, zum Bereitstellen von Informationen über die verschiedene Informationsvorrichtung und die Informationsvorrichtungen, die mit den externen Heimnetzwerken verbunden sind, an die den Zugriff fordernde Informationsvorrichtung; und
eine Proxy-Verarbeitungseinheit (234) zum Austauschen von Informationen mit den Informationsvorrichtungen, die mit dem Heimnetzwerk verbunden sind, über die Middleware-Verarbeitungseinheit (232), und zum Austauschen von Informationen mit der Netzwerkverarbeitungseinheit (220), um Daten mit den anderen Informationsvorrichtungen auszutauschen, die mit den externen Heimnetzwerken verbunden sind.

11. Das Multi-Home-Service-System nach Anspruch 10, wobei die Middleware-Verarbeitungseinheit (232), wenn eine Informationsvorrichtung, die mit dem Heimnetzwerk verbunden ist, eine Anforderung für einen Zugriff auf mindestens eine der anderen Informationsvorrichtungen, die mit dem einen der externen Heimnetzwerke verbunden ist, überträgt und kein VPN-Tunnel mit dem einen der externen Heimnetzwerke in der Datenbank (240) eingetragen ist, die Netzwerkverarbeitungseinheit (220) auffordert, den VPN-Tunnel mit dem einen des externen Heimnetzwerks zu bilden.

12. Das Multi-Home-Service-System nach Anspruch 11, wobei die Middleware-Verarbeitungseinheit (232), wenn die Multicast-Pakete von dem einen der externen Heimnetzwerke über den VPN-Tunnel übertragen werden, die Multicast-Pakete an die Informationsvorrichtungen, die mit dem Heimnetzwerk verbunden sind, weiterleitet.

13. Das Multi-Home-Service-System nach Anspruch 12, wobei die Middleware-Verarbeitungseinheit (232), wenn eine Antwortnachricht von einer Informationsvorrichtung übertragen wird, die mindestens eines der Multicast-Pakete empfangen hat, die Antwortnachricht über den VPN-Tunnel an eine Ursprungsadresse der Multicast-Pakete überträgt.

14. Das Multi-Home-Service-System nach Anspruch 1, wobei die Hauptverarbeitungseinheit (230), wenn eine Informationsvorrichtung, die mit dem Heimnetzwerk verbunden ist, eine bestimmte Dienstanforderung für eine Informationsvorrichtung eines bestimmten externen Heimnetzwerks, das für einen Dienst über die Multi-Home-Service-Anwendung registriert ist, überträgt, ein Datenpaket zum Anfordern, dass der bestimmte Dienst ausgeführt wird, durch den VPN-Tunnel mit dem bestimmten externen Heimnetzwerk an eine Zieladresse der entsprechenden Informationsvorrichtung, die mit dem Heimnetzwerk verbunden ist, überträgt.

15. Das Multi-Home-Service-System nach Anspruch 14, wobei die Hauptverarbeitungseinheit (230), wenn der VPN-Tunnel mit dem bestimmten externen Heimnetzwerk nicht gebildet ist, die Netzwerkverarbeitungseinheit (220) auffordert, den VPN-Tunnel zu bilden.

16. Das Multi-Home-Service-System nach Anspruch 15, wobei die Hauptverarbeitungseinheit (230), wenn eine Dienst-nicht-zugänglich-Nachricht von dem bestimmten externen Heimnetzwerk empfangen wird, die Datenbank (240) aktualisiert.

17. Das Multi-Home-Service-System nach Anspruch 16, wobei die Hauptverarbeitungseinheit (230), wenn die Dienst-nicht-zugänglich-Nachricht von dem bestimmten externen Heimnetzwerk empfangen wird, eine nicht-zugänglich-Nachricht an die den Dienst anfordernde Informationsvorrichtung überträgt.

18. Das Multi-Home-Service-System nach Anspruch 17, wobei die Hauptverarbeitungseinheit (230), wenn ein Datenpaket, das einen Dienst für einen Zugriff auf eine Informationsvorrichtung, die mit dem Heimnetzwerk verbunden ist, anfordert, über den VPN-Tunnel von einem externen Heimnetzwerk empfangen wird und das externe Heimnetzwerk erreichbar ist, das Datenpaket an eine Zieladresse des Pakets überträgt.

## Revendications

1. Un système de service à multi-rattachement, comprenant:
une première interface pour échanger des données avec des dispositifs d'information connectés à un réseau domestique;
une seconde interface pour échanger des données avec d'autres dispositifs d'information connectés à des réseaux domestiques externes;
une unité de stockage pour stocker une base de données (240) qui est établie sur la base des informations recueillies par rapport aux dispositifs d'information connectés au réseau domestique et aux autres dispositifs connectés aux réseaux domestiques externes;
**caractérisé par**
une unité de commande pour recueillir des informations sur les dispositifs d'information connectés au réseau domestique et lesdits autres dispositifs d'information, et pour fournir un service pour des accès réciproques parmi les dispositifs d'information connectés au réseau domestique et lesdits autres dispositifs d'information, pour enregistrer les réseaux externes dans la base de données (240) sur la base des informations de configuration sur les réseaux domestiques externes qui sont transmises à travers la première interface, et, si des paquets de multidiffusion sont livrés depuis les dispositifs d'information connectés au réseau domestique et les autres dispositifs connectés aux réseaux domestiques externes, pour livrer les paquets de multidiffusion via un tunnel à réseau privé virtuel, VPN, aux réseaux domestiques externes enregistrés dans la base de données (240);
dans lequel l'unité de commande comprend:
une unité de traitement d'application (210) pour recevoir et transmettre des messages par le biais d'une application de service à multi-rattachement qui y est intégrée pour que les dispositifs d'information connectés au réseau domestique soient mis en place avec accès à et des informations sur les réseaux domestiques externes;
une unité de traitement de réseau (220) pour former le tunnel VPN par des communications avec des passerelles des réseaux domestiques externes, et pour traiter des échanges mutuels de données avec les autres dispositifs d'information connectés aux réseaux domestiques externes via le tunnel VPN; et
une unité de traitement principal (230) pour recueillir lesdites informations sur les dispositifs d'information connectés au réseau domestique et les autres dispositifs d'information, pour fournir ledit service pour des accès réciproques parmi les dispositifs d'information et les autres dispositifs d'information, et, si les paquets de multidiffusion sont transmis depuis les dispositifs d'information connectés au réseau domestique, pour traiter des transferts de paquet de multidiffusion via le tunnel VPN formé par le biais de l'unité de traitement de réseau (220); et
dans lequel l'unité de traitement d'application (210) comprend:
une unité d'enregistrement de réseau domestique externe (212) pour mapper, si une demande d'enregistrement est transmise par le biais d'un identifiant basé sur des règles d'enregistrement fournies par l'application de service à multi-rattachement pour l'enregistrement d'un réseau domestique externe, le réseau domestique externe demandé et l'identifiant dans la base de données (240); et
une unité de fourniture de liste de réseau domestique externe (214) pour fournir, si l'application de service à multi-rattachement demande une liste des réseaux domestiques externes enregistrés par le biais de l'unité d'enregistrement de réseau domestique externe (212), la liste en référence à la base de données (240).

2. Le système de service à multi-rattachement selon la revendication 1, dans lequel l'unité de traitement d'application (210) comprend en outre:
une seconde unité d'enregistrement pour mapper, si l'application de service à multi-rattachement transmis une seconde demande d'enregistrement sur la base de secondes règles d'enregistrement fournies pour enregistrer des autres dispositifs d'information connectés aux réseaux domestiques externes et/ou des pilotes, lesdits dispositifs d'information et/ou lesdits pilotes pour lesquels l'enregistrement est demandé dans la base de données (240); et
une seconde unité de fourniture de liste pour fournir une liste desdits dispositifs d'information et/ou desdits pilotes enregistrés par le biais de la seconde unité d'enregistrement sur la base de l'application de service à multi-rattachement, en référence à la base de données (240).

3. Le système de service à multi-rattachement selon la revendication 2, dans lequel l'unité de traitement d'application (210) comprend en outre une unité de changement de configuration pour mettre à jour, si une demande d'effacement et de changement de configuration est transmise à partir de l'application de service à multi-rattachement sur la base de règles de révision fournies pour l'effacement et le changement d'une configuration d'options enregistrée par le biais des premières et secondes règles d'enregistrement, la base de données (240) sur la base des options demandées.

4. Le système de service à multi-rattachement selon la revendication 3, dans lequel l'unité de traitement d'application (210) comprend en outre une unité d'affichage d'état pour fournir, si une demande de fourniture d'informations d'état est transmise à partir de l'application de service à multi-rattachement par le biais d'une fenêtre d'affichage d'état prévue pour demander des informations d'état pour des échanges d'information avec les réseaux domestiques externes, les informations d'état en référence à la base de données (240) basées sur si le tunnel VPN avec les réseaux domestiques externes est formé.

5. Le système de service à multi-rattachement selon la revendication 4, dans lequel l'unité de traitement d'application (210) comprend en outre une unité de configuration d'une plage d'accessibilité admissible aux services pour mapper, si l'application de service à multi-rattachement met en place et transmet une plage d'accessibilité aux services pour les dispositifs d'information connectés au réseau domestique et les autres dispositifs d'information sur la base des règles de configuration d'une plage d'accessibilité aux services fournies pour mettre en place une plage d'accessibilité aux services des réseaux domestiques externes par rapport à chacun des dispositifs d'information connectés au réseau domestique, des informations de configuration d'une plage d'accessibilité aux services transmises dans la base de données (240).

6. Le système de service à multi-rattachement selon la revendication 1, dans lequel l'unité de traitement de réseau (220) comprend:
une unité de traduction d'adresses de réseau (222) pour traduire, si un message ayant une adresse IP privée comme adresse d'origine est reçu des dispositifs d'information connectés au réseau domestique, l'adresse IP privée en une adresse IP authentifiée attribuée par un fournisseur d'accès à Internet, et traduire une adresse IP d'authentification comme une adresse de destination d'un message transmis à partir d'un réseau domestique externe en une adresse IP privée attribuée à un dispositif d'information; et
une unité de traitement VPN (224) pour former le tunnel VPN par des communications avec des passerelles des réseaux domestiques externes, et mapper dans la base de données (240) un état de savoir si le tunnel VPN avec les réseaux domestiques externes est formé.

7. Le système de service à multi-rattachement selon la revendication 6, dans lequel, si des adresses IP privées du réseau domestique et d'un des réseaux domestiques externes, dans lequel le réseau domestique et ledit un des réseaux domestiques externes constituent deux réseaux domestiques, existent sur un même niveau et/ou l'un des deux réseaux domestiques comprend l'adresse de l'autre réseau domestique, l'unité de traitement de réseau (220) génère une nouvelle table d'adresses de réseau de façon à ce que les deux réseaux domestiques utilisent différentes adresses IP privées dans le tunnel VPN et mappe la table d'adresses de réseau dans la base de données (240), et traduit, sur la base de l'un d'une nouvelle table d'adresses de réseau, des adresses d'origine et de destination, pour un dispositif d'information connecté au réseau domestique ou des paquets de données transmis à partir du réseau domestique externe.

8. Le système de service à multi-rattachement selon la revendication 7, dans lequel, si l'adresse de destination est transmise dans un format d'une adresse IP de multidiffusion à partir d'un dispositif d'information connecté au réseau domestique, l'unité de traitement de réseau (220) encapsule l'adresse IP de multidiffusion dans un paquet de données utilisé sur Internet.

9. Le système de service à multi-rattachement selon la revendication 8, dans lequel, si une passerelle de l'un des réseaux domestiques externes transmet dans le format de multidiffusion l'adresse IP de destination encapsulée dans un paquet de données, l'unité de traitement de réseau (220) transmet en multidiffusion le paquet de données aux dispositifs d'information du réseau domestique, et, si des adresses IP d'origine et de destination sont transmises dans un format monodiffusion à partir d'un paquet de dispositif, transmet le paquet dans le format monodiffusion à l'adresse IP de destination.

10. Le système de service à multi-rattachement selon la revendication 9, dans lequel l'unité de traitement principal (230) comprend:
une unité de traitement d'intergiciel (232) pour recueillir des informations sur le dispositif et des informations de service sur les dispositifs d'information connectés au réseau domestique et les autres dispositifs, et pour mapper les informations sur le dispositif dans la base de données (240), et, quand un dispositif d'information connecté au réseau domestique demande l'accès à un autre dispositif d'information connecté au réseau domestique et aux autres dispositifs d'information connectés aux réseaux domestiques externes, pour fournir des information sur l'autre dispositif d'information et les dispositifs d'information connectés aux réseaux domestiques externes au dispositif d'information qui demande l'accès; et
une unité de traitement de proxy (234) pour échanger des informations avec les dispositifs d'information connectés au réseau domestique à travers l'unité de traitement d'intergiciel (232), et pour échanger des informations avec l'unité de traitement de réseau (220) pour échanger des données avec les autres dispositifs d'information connectés aux réseaux domestiques externes.

11. Le système de service à multi-rattachement selon la revendication 10, dans lequel, quand un dispositif d'information connecté au réseau domestique transmet une demande d'accès à au moins l'un des autres dispositifs d'information connectés à l'un des réseaux domestiques externes et aucun tunnel VPN avec l'un des réseaux domestiques externes n'est enregistré dans la base de données (240), l'unité de traitement d'intergiciel (232) demande à l'unité de traitement de réseau (220) de former le tunnel VPN avec l'un de réseau domestique externe.

12. Le système de service à multi-rattachement selon la revendication 11, dans lequel, si les paquets de multidiffusion sont transmis de l'un des réseaux domestiques externes via le tunnel VPN, l'unité de traitement d'intergiciel (232) transfère les paquets de multidiffusion aux dispositifs d'information connectés au réseau domestique.

13. Le système de service à multi-rattachement selon la revendication 12, dans lequel, si un message de réponse est transmis d'un dispositif d'information ayant reçu au moins un des paquets de multidiffusion, l'unité de traitement d'intergiciel (232) transmet le message de réponse à une adresse d'origine des paquets de multidiffusion via le tunnel VPN.

14. Le système de service à multi-rattachement selon la revendication 1, dans lequel, si un dispositif d'information connecté au réseau domestique transmet une demande de service spécifique pour un dispositif d'information d'un réseau domestique externe spécifique enregistré pour un service par le biais de l'application de service à multi-rattachement, l'unité de traitement principal (230) transmet à une adresse de destination du dispositif d'information correspondant connecté au réseau domestique, un paquet de données pour demander que le service spécifique soit exécuté à travers le tunnel VPN avec le réseau domestique externe spécifique.

15. Le système de service à multi-rattachement selon la revendication 14, dans lequel, si le tunnel VPN avec le réseau domestique externe spécifique n'est pas formé, l'unité de traitement principal (230) demande à l'unité de traitement de réseau (220) de former le tunnel VPN.

16. Le système de service à multi-rattachement selon la revendication 15, dans lequel, si un message de service inaccessible est reçu à partir du réseau domestique externe spécifique, l'unité de traitement principal (230) met à jour la base de données (240).

17. Le système de service à multi-rattachement selon la revendication 16, dans lequel, si le message de service inaccessible est reçu à partir du réseau domestique externe spécifique, l'unité de traitement principal (230) transmet un message inaccessible au dispositif d'information demandant le service.

18. Le système de service à multi-rattachement selon la revendication 17, dans lequel, si un paquet de données demandant un service pour un accès à un dispositif d'information connecté au réseau domestique est reçu via le tunnel VPN à partir d'un réseau domestique externe et le réseau domestique externe est accessible, l'unité de traitement principal (230) transmet le paquet de données à une adresse de destination du paquet.
